Europäisches Patentamt

European Patent Office

Office européen des brevets

(11) Veröffentlichungsnummer: **0 387 728**
**A1**

## (12) EUROPÄISCHE PATENTANMELDUNG

(21) Anmeldenummer: 90104570.8

(22) Anmeldetag: 10.03.90

(51) Int. Cl.5: **G01F 1/66**

(30) Priorität: 16.03.89 DE 3908637

(43) Veröffentlichungstag der Anmeldung:
**19.09.90 Patentblatt 90/38**

(84) Benannte Vertragsstaaten:
**DE ES FR IT SE**

(71) Anmelder: **LANG APPARATEBAU GMBH**
**Raiffeisenstrasse 7**
**D-8227 Siegsdorf/Obb.(DE)**

(72) Erfinder: **Wagner, Georg**
**Ludwig-Ganghofer-Strasse 22**
**D-8240 Berchtesgaden(DE)**

(74) Vertreter: **Wilk, Hans Christof, Dr.**
**c/o Henkel KGaA TFP / Patentabteilung**
**Henkelstrasse 67 Postfach 1100**
**D-4000 Düsseldorf(DE)**

(54) **Einrichtung zur Dosierüberwachung eines Cyanoacrylat-Klebstoffes oder anaeroben Klebstoffes.**

(57) Die Erfindung betrifft eine Einrichtung zur Dosierüberwachung eines Cyanoacrylat-Klebstoffs oder anaeroben Klebstoffs, welche gekennzeichnet ist durch ein aus Polytetrafluorethylen, Polyvinylidenfluorid oder einem Copolymerisat aus Tetrafluorethylen und Hexafluorpropylen bestehendes Meßrohr (2) mit einem Durchmesser zwischen 2 und 10 mm, das von einer Ultraschall-Sende- (3) und -Empfangsanordnung (4) mit einer Schallstrahlfokussierung (5) umgeben ist, eine daran angeschlossene Mischstufe (10) zur Erzeugung des Differenzfrequenzsignals aus Leitfrequenz und Empfangsfrequenz sowie eine Steuerschaltung zum Einschalten und Unterbrechen des Klebstofflusses.

EP 0 387 728 A1

## Einrichtung zur Dosierüberwachung eines Cyanoacrylat-Klebstoffes oder anaeroben Klebstoffes

Die Erfindung betrifft eine Einrichtung zur Dosierüberwachung eines Cyanoacrylat-Klebstoffes oder anaeroben Klebstoffes.

Da Cyanoacrylat-Klebstoffe in Anwesenheit von Metall und ebenso wie anaerobe Klebstoffe mit Luftfeuchtigkeit, z. B. bei Diffusion der Feuchtigkeit durch Kunststoffleitungen, aushärten, können für Einrichtungen dieser Art keine üblichen mechanischen, elektrischen oder kalorimetrischen Durchflußmeßsysteme verwendet werden. Ein weiteres Problem besteht darin, daß die in Betracht kommenden Durchflußgeschwindigkeiten nur wenige Mikroliter pro Sekunde betragen. Dies entspricht Strömungsgeschwindigkeiten von etwa 1 mm pro Sekunde bei größeren Rohrquerschnitten (15 bis 25 mm). Auch bei der Rohrleitung für Cyanoacrylat-Klebstoffe sind nur einige Kunststoffe geeignet, nämlich Polytetrafluorethylen (PTFE), Polyvinylidenfluorid (PVDF), Copolymerisat aus Tetrafluorethylen und Hexafluorpropylen (FEP), und Polyethylen (PE), das aber wegen seines relativ niedrigen Schmelzpunkts und Problemen bei der mechanischen Bearbeitung kaum geeignet ist.

Es ist zwar bekannt, mittels des akustischen Dopplereffekts und Ultraschall Strömungsgeschwindigkeiten zu messen (DE 34 09 595 A1, Deutsche Zeitschrift "msr", Berlin, Jahrgang 31 (1988), Seiten 232 - 234 und Britische Zeitschrift "Medical and Biological Engineering", Jahrgang 13, Nr.1, Januar 1975, Seiten 59 - 64), aber die genannten Materialien (PTFE, PVDF, FEP) für das Meßrohr sind piezoelektrisch und stören dadurch die von den bekannten Ultraschall-Meßanordnungen erzeugten Signale erheblich.

Der Erfindung liegt daher die Aufgabe zugrunde, mit der Einrichtung der eingangs genannten Art zum einen eine Überwachung der Dosierung und zum anderen eine Automatisierung der Dosierung durch Messung und Regelung zu erreichen.

Diese Aufgabe wird erfindungsgemäß durch ein aus Polytetrafluorethylen, Polyvinylidenfluorid oder einem Copolymerisat aus Tetrafluorethylen und Hexafluorpropylen bestehendes Meßrohr mit einem Durchmesser zwischen 2 und 10 mm, das von einer Ultraschall-Sende-und -empfangsanordnung mit einer Schallstrahlfokussierung umgeben ist, eine daran angeschlossene Mischstufe zur Erzeugung des Differenzfrequenzsignals aus Leitfrequenz und Empfangsfrequenz, sowie eine Steuerschaltung zum Einschalten und Unterbrechen des Klebstoffflusses gelöst.

Dadurch, daß einerseits der Schallstrahl fokussiert sowohl eingestrahlt als auch empfangen wird und andererseits die Mischstufe verwendet wird, um das vom Meßrohr ausgehende weiße Rauschen ("noise gating") zu unterdrücken, wird erfindungsgemäß ein ausreichend klares Signal erhalten, um den Klebstoffluß zu überwachen, zu steuern und zu regeln.

Die Mischstufe arbeitet nach dem bekannten Überlagerungsprinzip. Zusätzlich kann für das Empfangssignal ein Hochfrequenzverstärker vorgesehen werden. Bei dem genannten Durchmesser des Meßrohrs hat der Klebstoff eine genügend hohe Strömungsgeschwindigkeit, um ein meßbares Signal zu erhalten.

Die genannte Steuerschaltung umfaßt auch eine Schaltung zum Zählen der Impulse des Differenzfrequenzsignals, deren Anzahl dem Volumen des durch das Meßrohr geflossenen Klebstoffs proportional ist. Typische Werte sind dabei 1 ml pro etwa 800 Impulse. Die erfindungsgemäße Einrichtung kann daher z. B. so ausgelegt sein, daß bis 800 gezählt wird und dann ein Ventil geschlossen wird.

Insbesondere wird vorgeschlagen, daß die Schallstrahlfokussierung auf eine Strahlbreite von etwa 2 bis 4 mm in der Schallkeule ausgelegt ist.

Ein weiteres Problem bei der Verwendung der genannten Kunststoffe in Ultraschall-Meßeinrichtungen ist, daß diese Kunststoffe sehr stark die Ultraschallschwingungen dämpfen. Um dennoch ein ausreichend gutes Signal zu erhalten, ist daher ein gutes Reflektionsvermögen der strömenden Flüssigkeit durch Streuer, nämlich kleine Partikel von einigen nm Durchmesser notwendig, wie es z. B. bei dem genannten Klebstoff gegeben ist. Andere Flüssigkeiten, z. B. entgastes Wasser, haben jedoch nicht dieses Reflektionsvermögen. Aus diesem Grunde ist es auch vorteilhaft, daß möglichst viel von der ausgestrahlten Sendeenergie von der Empfangsanordnung aufgefangen wird. Daher wird vorgeschlagen, daß die Sende- und die Empfangsanordnung unmittelbar am Meßrohr mittels einer Klebstoff-Vergußmasse, insbesondere eines Zweikomponentenklebstoffes, bevorzugt Epoxyharz befestigt ist. Der verwendete Klebstoff sollte dabei die gleiche Schallgeschwindigkeit bzw. Schallbrechung wie das Material des Meßrohrs haben, damit weder Schallbrechung noch Reflektion an der Außenfläche des Meßrohrs auftreten.

Vorteilhaft ist ferner, wenn die Sendeleistung der Sendeanordnung einstellbar ist. So kann die Dosiereinrichtung den unterschiedlichen Typen des Cyanoacrylat-Klebstoffes angepaßt werden.

Aus dem gleichen Grunde wird bevorzugt, wenn der Verstärkungsfaktor des Verstärkers einstellbar ist.

Um besonders genaue Messungen durchführen zu können, wird ferner vorgeschlagen, daß die Frequenz des Ultraschalls mindestens 10 MHz beträgt.

Außerdem sollte die Bandbreite des NF-Verstärkers zur Verstärkung des Dopplersignals zwischen 10 Hz und 30 kHz liegen.

In manchen Fällen ist es wünschenswert, daß nicht nur die Durchflußgeschwindigkeit mit der Einrichtung erfaßt wird, sondern auch die in einem bestimmten Zeitintervall vorbeigeströmte Durchflußmenge. Daher wird vorgeschlagen, eine an den Verstärker angeschlossene Schaltung zum Umwandeln des die Durchflußgeschwindigkeit des Klebstoffes darstellenden Signals in ein die Durchflußmenge darstellenden Signals vorzusehen. Dies kann zum Beispiel eine Integratorschaltung sein, die die aufgelaufenen Impulse zählt.

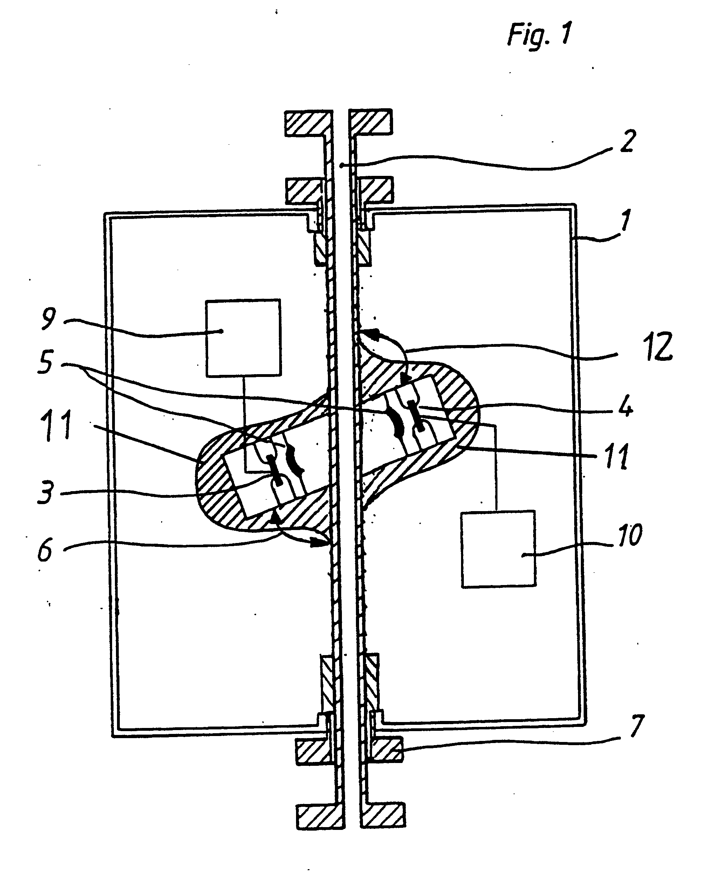

Nachfolgend wird ein Ausführungsbeispiel die Erfindung anhand der einzigen Zeichnung (Figur 1) beschrieben, die die wesentlichen Teile der erfindungsgemäßen Dosiereinrichtung im Schnitt zeigt.

Das Meßprinzip dieser Einrichtung beruht auf dem Dopplereffekt, wobei die Dopplerfrequenz, die Differenz aus Leitfrequenz und Empfangsfrequenz, abhängig von der Geschwindigkeit des strömenden Medium ist. Mit Hilfe dieses Verfahrens lassen sich, wenn der Ultraschallstrahl fokussiert ausgesendet und empfangen wird, Bruchteile von mm/s der Strömungsgeschwindigkeit bestimmen und damit umgerechnet wenige Mikroliter an Volumen pro Sekunde der strömenden Flüssigkeit. Wegen der Hochfrequenz des Ultraschalls können augenblickliche Messungen durchgeführt werden, die jede Veränderung der Strömungsgeschwindigkeit sofort detektieren. Dadurch ist es möglich, auch intermittierende und oszillierende Flüssigkeitsströme, wie sie zum Beispiel von Kolbenmembranpumpen erzeugt werden, exakt zu bestimmen. Die hohe Leitfrequenz der Einrichtung verringert dabei den prinzipiellen Fehler der Messmethode, wie er gerade bei ungleichförmigen Strömungsbewegungen auftreten kann. Gegenüber den bekannten induktiven Durchflußmeßmethoden weist die hier beschriebene Methode den Vorteil auf, daß sie keine elektrische Leitfähigkeit des strömenden Mediums voraussetzt. Außerdem ist zur Gewinnung einer Signalspannung in einer induktiven Durchflußmessung ein Elektrodenpaar in der Rohrleitung erforderlich, welches bei dem hier zu vermessenden strömenden Klebstoffes zu einem Zuwachsen der Rohrleitung führen würde.

In der hier dargestellten Einrichtung tritt der Ultraschall-Leitstrahl durch das Meßrohr mit einem Innendurchmesser von 4 mm in das Medium, den Klebstoff, ein, wird von diesem reflektiert, bzw. tritt durch dieses hindurch, um dann auf eine Ultraschall-Empfängereinheit einzutreffen. Der verwendete Ultraschall ist bezüglich seiner Energie und Wellenlänge so abgestimmt, daß nach dem Austritt aus der strömenden Flüssigkeit eine um die Dopplerfrequenz verschobene Leitfrequenz gemessen werden kann.

Durch eine selektive, elektronische Signalfilterung kann dann die Auswertung des Dopplersignals aus der Differenz der gesendeten Leitfrequenz zur um die Dopplerfrequenz verstimmten Empfangsfrequenz erfolgen. Die nachgeschaltete Meßwert- und Signalverarbeitungsschaltung wertet das allgemeine oder das speziell gefilterte Frequenzspektrum so aus, daß die Strömungsgeschwindigkeit und -richtung sowie unter Einbeziehung des Rohrquerschnittes auch die Durchflußmenge errechnet werden kann, bzw. aus dem Frequenzspektrum die Impulsanzahl gewonnen wird, die ein Maß für die Klebstoffmenge ist. Durch die selektive Filterung des Dopplersignal-Frequenzspektrums nach Amplitude und Frequenzhöhe sowie Frequenzanteilen innerhalb eines einstellbaren oder geregelten Zeitintervalles ist auch die Erkennung der Homogenität und Zusammensetzung des flüssigen Mediums mit unterschiedlicher Schallhärte möglich. Das erhaltene Signal kann auch zur Auswertung hinsichtlich einer Störungsmeldung herangezogen werden. In der genannten Schaltung wird von der Meßelektronik der Anteil des Übersprechens der Leitfrequenz, der direkt über die Rohrwandung oder über den Außenbereich an den Empfänger gelangt, elektronisch unterdrückt bzw. ausgeblendet, so daß nur eine bereinigte Dopplerfrequenz zur Signal-und Meßwertweiterverarbeitung kommt. Die gemessene Strömungsgeschwindigkeit und -richtung bzw. das Volumen pro Zeiteinheit des strömenden Mediums wird in einer Meßwertanzeige analogisiert oder digitalisiert und gelangt in Echtzeit oder als Mittelwert mit einstellbaren Dämpfungsfaktoren zur Anzeige.

Das Strömungsgeschwindigkeits- oder das Volumen-Signal entsprechend der gezählten Impulsanzahl wird in der erfindungsgemäßen Einrichtung zum Zweck der Prozeßsteuerung in einem Dosierverfahren, z. B. zur Pumpensteuerung oder zur Ansteuerung eines Ventils mit definierter Durchströmmenge verwendet.

Die in Figur 1 gezeigte Einrichtung ist in einem Gehäuse (1) untergebracht, durch welches das Meßrohr (2) mittels Durchführungsbuchsen (7) geführt ist. Das Meßrohr (2) weist an seinen Enden je einen Flansch zum Anschließen von Rohrleitungen auf. Unmittelbar an das Meßrohr (2) ist zum einen ein Ultraschall-Sender (3) mit Fokussiereinrichtung (5), sowie ein Ultraschall-Empfänger (4) mit Fokussierung (5) mittels einer Zwei-Komponenten-Vergußmasse (11) angeklebt und eingegossen. Sender (3) und Empfänger (4) können, wie in Figur 1 gezeigt, einander gegenüberliegen, sie können aber auch auf der gleichen Seite des Meßrohrs angeordnet sein. Bei bestimmten Winkeln (6) erhält man ein besonders gutes Meßsignal. Dieser Einstrahlwinkel (6), vorzugsweise 45°, bzw. Empfangswinkel (12), wird daher vor dem Vergießen von Sender und Empfänger mit dem Meßrohr (2) auf maximales Signal eingestellt. Der Sender (3) erhält sein Signal über eine Ultraschall-Sendeelektronik (9). Das empfangene Signal wird schließlich von einer an den Ultraschall-Empfänger (4) angeschlossenen Meßsignal-Empfangs- und Auswerte-Elektronik (10) weiter verarbeitet, wie oben ausgeführt worden ist. Gehäuse 1 kann aus Metall bestehen, die anderen Elemente bestehen bevorzugt aus Kunststoff, damit möglichst wenige Reflektionen des Ultraschalls auftreten. Da die Stirnflächen von Sender (3) und Empfänger (4) plan, die Außenfläche des Meßrohres (2) aber zylindrisch ist, wird der dadurch entstehende Zwischenraum zwischen Meßrohr (2) und Sender (3) bzw. Empfänger (4) mit der Vergußmasse (11) ausgefüllt. Die Schalleinkopplungsmasse ist ent sprechend dem Klebstoff und dem Meßrohrmaterial so zu wählen, daß ein möglichst klares Signal erhalten wird.

Bezugszeichenliste:

1. Gehäuse
2. Meßrohr mit Flansch
3. Ultraschall-Sender
4. Ultraschall-Empfänger
5. Schallstrahlfokussierung mit Halterung
6. Einstrahlwinkel, bezüglich Meßrohr einstellbar
7. Durchführungsbuchse in das Meßgerät
9. Ultraschall-Sendeelektronik
10. Meßsignal-Empfangs- und Auswerte-Elektronik
11. Zwei-Komponenten-Vergußmasse
12. Empfangswinkel

**Ansprüche**

1. Einrichtung zur Dosierüberwachung eines Cyanoacrylat-Klebstoffs oder anaeroben Klebstoffs, gekennzeichnet durch
ein aus Polytetrafluorethylen, Polyvinylidenfluorid oder einem Copolymerisat aus Tetrafluorethylen und Hexafluorpropylen bestehendes Meßrohr (2) mit einem Durchmesser zwischen 2 und 10 mm, das von einer Ultraschall-Sende- (3) und -Empfangsanordnung (4) mit einer Schallstrahlfokussierung (5) umgeben ist, eine daran angeschlossene Mischstufe (10) zur Erzeugung des Differenzfrequenzsignals aus Leitfrequenz und Empfangsfrequenz sowie eine Steuerschaltung zum Einschalten und Unterbrechen des Klebstofflusses.

2. Einrichtung nach Anspruch 1,
dadurch gekennzeichnet,
daß die Schallstrahlfokussierung (5) auf eine Strahlbreite von etwa 2 bis 4 mm in der Schallkeule ausgelegt ist.

3. Einrichtung nach Anspruch 1 oder 2,
dadurch gekennzeichnet,
daß die Sende- (3) und die Empfangsanordnung (4) unmittelbar am Meßrohr (2) mittels einer Klebstoff-Vergußmasse (11), insbesondere eines Zweikomponentenklebstoffs, bevorzugt Epoxyharz befestigt ist.

4. Einrichtung nach einem der Ansprüche 1 bis 3,
dadurch gekennzeichnet,
daß die Sendeleistung der Sendeanordnung (3) einstellbar ist.

5. Einrichtung nach einem der Ansprüche 1 bis 4,
dadurch gekennzeichnet,
daß der Verstärkungsfaktor des Verstärkers (10) einstellbar ist.

6. Einrichtung nach einem der Ansprüche 1 bis 5,
dadurch gekennzeichnet,
daß die Frequenz des Ultraschalls mindestens 10 MHz beträgt.

7. Einrichtung nach einem der Ansprüche 1 bis 6,
dadurch gekennzeichnte,
daß die Bandbreite des NF-Verstärkers (10) zur Verstärkung des Dopplersignals zwischen 10 Hz und 30 kHz liegt.

8. Einrichtung nach einem der Ansprüche 1 bis 7,
gekennzeichnet durch
eine an den Verstärker (10) angeschlossene Schaltung zum Umwandeln des die Durchflußgeschwindigkeit des Klebstoffs darstellenden Signals in ein die Durchflußmenge darstellenden Signals.

*Fig. 1*

Europäisches
Patentamt

**EUROPÄISCHER RECHERCHENBERICHT**

Nummer der Anmeldung

EP    90 10 4570
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3409595 (MICRO PURE SYSTEMS INC.) <br> * Seite 6, Zeile 32 - Seite 7, Zeile 4 * <br> * Seite 7, Zeile 24 - Seite 11, Zeile 22; <br> Figuren 1, 2 * <br> --- | 1, 8 | G01F1/66 |
| D,A | MSR <br> vol. 31, no. 5, 1988, BERLIN, DE <br> Seiten 232 - 234; W.SCHMIDT: <br> "AKUSTISCHE DOPPLER-STRÖMUNGSMESSUNG" <br> * Seite 232, linke Spalte * <br> * Seite 233, linke Spalte, Absatz 1 - Seite 233, <br> rechte Spalte, Absatz 1; Figuren 1, 2 * <br> --- | 1, 3, 8 | |
| A | IEEE TRANSACTIONS BIOMEDICAL ENGINEERING <br> vol. BME25, no. 3, Mai 1978, <br> Seiten 255 - 263; D.M. DI PIETRO: <br> "OPTIMAL SYSTEM DESIGN FOR AN IMPLANTABLE CW <br> DOPPLER ULTRASONIC FLOWMETER" <br> * Seite 261, rechte Spalte, Absatz 3 * <br> --- | 1 | |
| A | DE-A-1958235 (PANAMETRICS INC.) <br> * Seite 12 * <br> * Seite 31, Absatz 2 - Seite 33, Absatz 1; Figur <br> 11 * <br> --- | 1 | RECHERCHIERTE SACHGEBIETE (Int. Cl.5) <br><br> G01F |
| A | NATURE PHYSICAL SCIENCE <br> vol. 242, no. 114, März 1973, <br> Seiten 12 - 13; <br> "LIQUID METAL FLOW MEASUREMENTS USING AN <br> ULTRASONIC DOPPLER VELOCIMETER" <br> * Seite 12, rechte Spalte; Figur 1 * <br> --- | 1, 6 | |
| A | US-A-4690002 (LLOYD C. HUBBARD) <br> * Spalte 3, Zeilen 33 - 62; Figur * <br> --- | 1, 5 | |
| A | US-A-2931223 (J. KRITZ) <br> * Spalte 5, Zeile 48 - Spalte 6, Zeile 9; <br> Figuren 14-17 * <br> --- | 1 | |

-/--

Der vorliegende Recherchenbericht wurde für alle Patentansprüche erstellt

| Recherchenort | Abschlußdatum der Recherche | Prüfer |
|---|---|---|
| DEN HAAG | 12 JUNI 1990 | HEINSIUS R. |

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| P,A | DE-U-8903288 ( LANG APPARATEBAU GMBH ) * das ganze Dokument * ----- | 1-8 | |

RECHERCHIERTE SACHGEBIETE (Int. Cl.5 )

Der vorliegende Recherchenbericht wurde für alle Patentansprüche erstellt

| Recherchenort | Abschlußdatum der Recherche | Prüfer |
|---|---|---|
| DEN HAAG | 12 JUNI 1990 | HEINSIUS R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)